# EUROPÄISCHE PATENTSCHRIFT

(11) **EP 0 726 510 B1**
(45) Veröffentlichungstag und Bekanntmachung des Hinweises auf die Patenterteilung: **23.05.2001**
(21) Anmeldenummer: 96100482.7
(22) Anmeldetag: 15.01.1996
(51) Int. Cl.: G05D 7/06, G01F 1/08

(54) **Volumenmesser mit Düsenventil**
Flow meter with nozzle
Débitmètre avec buse

(30) Priorität: 11.02.1995 DE 19504581; 24.04.1995 DE 19514980
(43) Veröffentlichungstag der Anmeldung: 14.08.1996
(73) Patentinhaber: Hydrometer GmbH, D-91522 Ansbach (DE)
(72) Erfinder: Ziegler, Horst, Prof.Dr.Dipl.-Phys., D-33100 Paderborn (DE); Schulze, Manfred, Dipl.-Phys.Ing., D-91522 Ansbach (DE)
(74) Vertreter: Matschkur, Lindner Blaumeier Patent- und Rechtsanwälte

(56) Entgegenhaltungen:
- DE-A- 4 403 178
- DE-C- 362 792
- DE-U- 8 813 764
- FR-A- 615 210
- GB-A- 173 949
- GB-A- 503 748

## Beschreibung

Die Erfindung betrifft einen Volumenmesser, mit einer das Volumen eines durchströmenden Fluids messenden Volumenmeßeinrichtung umfassend ein fluidstromgetriebenes Flügelrad, einem den Fluidfluß regelnden, Durchflußeinstellorgan und einer Steuer- und Auswerteelektronik.

Wärmezähler bestehen aus Volumenmeßteil, Temperatursensoren und einem Rechenwerk. Sie werden in zunehmendem Maße heutzutage direkt am Heizkörper angeordnet. Aufgrund dieser direkten Anordnung ist die zählerspezifische Durchflußdynamik gegenüber einer zentralen Anordnung eines Wärmezählers innerhalb eines Heizkörpersystems zwar deutlich erniedrigt, doch immer noch erheblich und umfaßt auch besonders kleine Durchflüsse, beispielsweise dann, wenn dem Heizkörper lediglich geringe Wärmeenergie zuzuführen ist. Da infolgedessen ein exaktes Arbeiten des Wärmezählers sowohl im Bereich des Minimaldurchflusses als auch des Maximaldurchflusses erforderlich ist, sind hohe Anforderungen an die Meßgenauigkeit gestellt. Für die Zulaßbarkeit der heizkörpereigenen Wärmezähler wird derzeit ein zum jeweiligen Meßwert proportionaler Maximalfehler des Volumenmeßteils um 5% gefordert, was bei der großen Meßdynamik hohe Anforderungen stellt. Diese Anforderungen führen insbesondere im Bereich kritischer Minimaldurchflüsse zu bisher kaum überwundenen Problemen im Hinblick auf Fehlmessungen. Einer akzeptablen Realisation stehen bisher zwei zueinander konkurrierende Voraussetzungen entgegen:

Zum einen muß bei kritischen Minimaldurchflüssen der Impulsübertrag des Fluidstrahls auf den Flügel des Flügelrades das Anlaufreibmoment der Radlagerung übersteigen, um den Zähler in Bewegung zu setzen. Im langsamen Betrieb, also bei geringem Durchfluß, muß dann dieses fluideigene Antreibsdrehmoment deutlich höher sein als das oft instabile Betriebs-Reibdrehmoment des Lagers. Bei gegebenem Durchfluß ist das treibende Antriebsdrehmoment des Fluidstrahls proportional zur Strömungsgeschwindigkeit des Fluids und damit umgekehrt proportional zur Strahldimension bzw. zum Strahlquerschnitt.

Dem gegenläufig ist die Tatsache, daß der maximal zulässige Druckabfall bei Volumenmeßteilen rechtlich und technisch begrenzt ist. Der Druckabfall eines Durchflußeinstellorgans, beispielsweise einer Düse, ist nun ebenfalls umgekehrt proportional zu ihrem Querschnitt, weshalb zur Erzielung eines geringen Druckabfalls ein großer Durchlaßquerschnitt erforderlich ist, was der Forderung nach einem kleinen Durchlaßquerschnitt für hohe Strahlgeschwindigkeit und damit gutem Anlauf und Genauigkeit widerspricht. Infolgedessen ist die Dynamik von Meßsystemen mit Flügelradzählern sehr stark begrenzt.

Aus der FR 615 210 A ist bereits ein Flügelradzähler bekannt geworden, bei dem eine Klappe A zur automatischen Steuerung des internen Strömungsverlaufs von Teilströmen innerhalb des Volumenmessers vorgesehen ist. Diese bildet aber kein Durchflußeinstellorgan, mit dem der Gesamtdurchfluß von außen gesteuert werden kann. Ein derartiges Durchflußeinstellorgan müßte zusätzlich in der Zu- oder Ableitung des Flügelradzählers gemäß dieser französischen Patentschrift angeordnet werden. Damit ergibt sich bei diesem Flügelradzähler auch nicht das Problem einer Veränderung des Auftreffpunktes der Strömung bei der Veränderung des Durchflußeinstellorgangs.

Der Erfindung liegt somit die Aufgabe zugrunde, eine Volumenmeßeinrichtung zu schaffen, die die eingangs genannten Probleme hinsichtlich der Meßgenauigkeit insbesondere im Bereich kritischer Minimaldurchflüsse löst.

Zur Lösung dieser Aufgabe ist ein Volumenmesser vorgesehen, mit einer das Volumen eines durchströmenden Fluids messenden Volumenmeßeinrichtung umfassend ein fluidstromgetriebenes Flügelrad, einem den Fluidfluß regelnden Durchflußeinstellorgan und einer Steuer- und Auswerteelektronik, wobei das Durchflußeinstellorgan, das zwischen einer Geschlossen-Stellung, in der es den Fluidfluß zum Flügelrad unterbricht, und einer Offen-Stellung mit maximalem Fluidfluß variierbar ist, derart bezüglich des Flügelrades angeordnet ist, daß der vom Durchflußeinstellorgan erzeugte Fluidstrahl zumindest im Bereich geringer Öffnungsgrade des Durchflußeinstellorgans und damit geringer Strahldimension direkt auf die Flügel des Flügelrades trifft, und daß die Volumenmeßeinrichtung ein steuerbares elektronisches Untersetzungsgetriebe aufweist, wobei der Untersetzungsfaktor in Abhängigkeit vom Öffnungsgrad des Durchflußeinstellorgans eingestellt ist

Mit dieser erfindungsgemäßen strömungstechnischen Ausgestaltung wird somit vorteilhaft erreicht, daß der Impuls des anströmenden Fluids bei minimaler Öffnung, also bei Minimaldurchfluß, exakt auf die Flügel einwirkt und somit eine ausreichende Kraft zur Überwindung des Reibedrehmoments des Lagers des Flügelrades erzeugt wird. Durch diesen direkten Impulsübertrag ist es möglich, bei geringem Öffnungsquerschnitt eine ausreichende Strahlgeschwindigkeit zu erzeugen, damit ein ausreichendes hydrodynamisches Drehmoment und letztlich eine ordentliche Meßgenauigkeit bei kleinen Durchflüssen erzielt werden kann. Bei hohem Wärmebedarf dagegen wird das Durchflußeinstellorgan, beispielsweise ein Thermostatventil, sich öffnen, also der Querschnitt vergrößert, wodurch der Druckabfall und die Strömungsgeschwindigkeit entsprechend verringert werden.

Das steuerbare elektronische Untersetzungsgetriebe bewirkt eine exakte Mengenerfassung über die Flügelraddrehzahl, da infolge der von der hohen Meßdynamik herrührenden Durchflußunterschiede zwischen Minimal- und Maximaldurchfluß mit unterschiedlichen Untersetzungen gearbeitet werden muß.

Zur Bestimmung der öffnungsgradabhängigen Einstellung des Untersetzungsfaktors ist in weiterer Erfindungsausgestaltung wenigstens eine Einrichtung zur Bestimmung des Öffnungsgrades des Durchflußeinstellorgans vorgesehen. Diese kann, abhängig von der Art des integrierten Durchflußeinstellorgans, unterschiedlicher Art sein. Wird beispielsweise ein mittels eines Drosselstößels arbeitendes Thermostatventil verwendet, kann die Einrichtung als elektronischer Wegaufnehmer ausgebildet sein. Alternativ hierfür können Drucksensoren zur Erfassung des Druckabfalls im Ventilbereich eingesetzt werden, woraus sich der Öffnungsgrad ermitteln läßt. Ferner können elektronische Regler zur Vorgabe des Soll-Öffnungsgrades verwendet werden, wobei dann die Sollwertstellungsvorgabe das bei der Einstellung des Untersetzungsfaktors beachtliche Maß ist.

Alternativ dazu kann erfindungsgemäß der Übersetzungsfaktor in Abhängigkeit der als Maß für den Öffnungsgrad dienenden Raumtemperatur eingestellt sein, da der Öffnungsgrad bei einem Thermostatwärmezähler selbstverständlich in Abhängigkeit der Raumtemperatur, basierend auf welcher überhaupt ein Durchfluß einzustellen oder zu beenden ist, eingestellt wird.

Als Durchflußeinstellorgane finden erfindungsgemäß Thermostatventile Verwendung, wobei jede Art von Thermostatventilen eingesetzt werden kann, so beispielsweise Ventile auf der Basis eines Bimetallreglers, eines elektromechanischen oder eines piezoelektrischen Reglers. Weiterhin kann erfindungsgemäß vorgesehen sein, daß das steuerbare elektrische Getriebe zum Ausgleich etwaiger Nicht-Linearitäten der Kennlinie (Durchfluß pro Drehzahl) mittels der Steuer- und Auswerteelektronik steuerbar ist. Diese Kennliniensteuerung kann z.B. über den Weg eines Druckstößels bei entsprechend integriertem Thermostatventil, dem Druckabfall im Ventilbereich, den Reglerstellgrößenausgang eines elektronischen Reglers oder die Raumtemperatur als Sollgrößen-Eingang des Reglers erfolgen. Im übrigen kann die Linearisierung auch individuell zum Ausgleich von mechanischen Fertigungstoleranzen des Durchflußeinstellorgans erfolgen.

Weitere Vorteile, Merkmale und Einzelheiten der Erfindung ergeben sich aus dem im folgenden beschriebenen Beispiel sowie anhand der Zeichnungen. Dabei zeigen:
- Fig. 1: ein im Bereich des Flügelrades angeordnetes Durchflußeinstellorgan im geschlossenen Zustand, als ausschnittsweise Prinzipskizze zur Verdeutlichung der Erfindung,
- Fig. 2: die Anordnung aus Fig. 1 im gering geöffneten Zustand,
- Fig. 3: die Anordnung aus Fig. 2 im voll geöffneten Zustand,
- Fig. 4: eine Prinzipskizze mit einer anderen Ausführungsform eines Durchflußeinstellorgans, und
- Fig. 5: eine Aufsicht auf das Durchflußeinstellorgan nach Fig. 4.

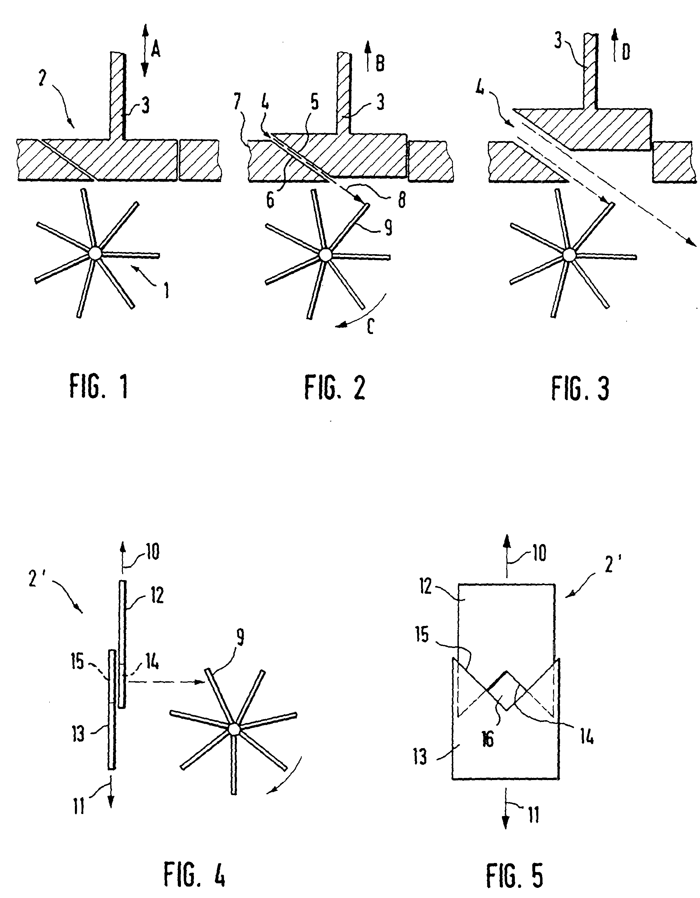

Fig. 1 zeigt, als Ausschnitt aus dem Inneren eines erfindungsgemäßen Volumenmessers mit Düsenventil, ein Flügelrad 1, und ein im Bereich des Flügelrades 1 angeordnetes Durchflußeinstellorgan 2. Das Durchflußeinstellorgan 2 ist im geschlossenen Zustand dargestellt. Es handelt sich bei diesem um ein Ventil mit einem Drosselstößel 3, der über eine nicht dargestellte Stelleinrichtung bewegt wird, wie durch den Doppelpfeil A dargestellt. Der Durchflußquerschnitt wird somit in Abhängigkeit der thermischen Sollgröße gezielt verändert. Infolge des geschlossenen Zustands des Durchflußeinstellorgans 2 tritt durch dieses kein Fluid hindurch, so daß das Flügelrad 1 nicht betätigt wird, also auch kein Durchfluß gemessen werden kann.

Fig. 2 zeigt nun das Durchflußeinstellorgan 2 in gering geöffnetem Zustand. Dieser Zustand entspricht dem eingangs beschriebenen Zustand, bei welchem ein kritischer Minimaldurchfluß vorliegt. Der Drosselstößel 3 wird hierbei ein kurzes Stück in Richtung des Pfeils B nach oben bewegt, so daß ein Durchflußkanal 4 geöffnet wird. Dieser wird von zwei zueinander komplementären Schrägflächen 5 und 6 am Drosselstößel 3 bzw. einer Wandung 7 des Durchflußeinstellorgans gebildet. Durch diesen Durchflußkanal 4 tritt infolge des zwischen dem Bereich vor und dem Bereich hinter dem Durchflußeinstellorgan 2 herrschenden Druckunterschieds ein Fluidstrahl 8. Dieser ist infolge der Kanalausrichtung derart gerichtet, daß er genau auf einen Flügel 9 des Flügelrades 1 trifft. Infolge des geringen Kanalquerschitts und damit des geringen Strahlquerschnitts des Fluidstrahls 8 ist der von dem Fluidstrahl 8 an den Flügel 9 übertragbare Impuls ausreichend groß, um das Reibemoment des Flügelrades 1 zu überwinden, und dieses in Drehbewegung (Pfeil C) zu setzen. Durch die exakte Ausrichtung des Durchflußkanals 4 auf die Flügel 9 des Flügelrades 1 ist somit auch bei extrem kleinen Öffnungsgraden und damit sehr kleinen Kanaldimensionen ein exaktes und meßgenaues Andrehen des Flügelrades 1 gewährleistet, wobei weiterhin auch die im Hinblick auf die herrschenden Druckverhältnisse bestehenden Normen ohne weiteres eingehalten werden können.

Mit zunehmender Öffnung des Drosselstößels 3 (Pfeil D) nimmt der Querschnitt des Durchflußkanals 4 zu, wodurch zwar mehr Fluid hindurchtritt, dieses jedoch infolge der Querschnittsvergrößerung in seiner Strömungsgeschwindigkeit verringert ist. Gleichermaßen wird der zwischen den Bereichen vor und hinter dem Durchflußeinstellorgan herrschende Druckunterschied abgebaut. Bei den in diesem Fall strömenden Durchflußmengen ist die am Flügelrad 1 angreifende Kraft und somit der Impulsübertrag stets ausreichend groß, wobei bei voll geöffnetem Durchflußeinstellorgan die maximal am Flügelrad 1 vorbeiströmende Fluidmenge die einwirkende Kraft und damit die Drehzahl begrenzt.

Bei dem in den Figuren 4 und 5 gezeigten gezeigten abgewandelten Durchflußeinstellorgan 2' weist dieses zwei dichtend aneinanderliegende gleitend in Richtung der Pfeile 10 und 11 verstellbare Segmentscheiben 12 und 13 auf, deren dreieckförmige Ausschnitte 14 und 15 je nach der Überdeckung einen mehr oder weniger großen Querschnitt 16 freigeben, durch den ein Strahl auf das Flügelrad 9 abgestrahlt wird. Je nachdem, welche der Segmentscheiben 11, 12 man verschiebt, kann man dabei auch regulieren, ob man nur genau den Rand der Flügel des Flügelrads 9 treffen will, d.h. man hat die Verstellmöglichkeiten entsprechend dem Ausführungsbeispiel nach den Figuren 1 bis 3, wobei allerdings nicht nur eine lineare Verstellung in einer Richtung, sondern zusätzlich auch noch senkrecht dazu gegeben ist.

## Patentansprüche

1. Volumenmesser, mit einer das Volumen eines durchströmenden Fluids messenden Volumenmeßeinrichtung umfassend ein fluidstromgetriebenes Flügelrad (1), einem den Fluidfluß regelnden Durchflußeinstellorgan (2) und einer Steuer- und Auswerteelektronik, wobei das Durchflußeinstellorgan (2), das zwischen einer Geschlossen-Stellung, in der es den Fluidfluß zum Flügelrad unterbricht, und einer Offen-Stellung mit maximalem Fluidfluß variierbar ist, derart bezüglich des Flügelrades (1) angeordnet ist, daß der vom Durchflußeinstellorgan (2) erzeugte Fluidstrahl (8) zumindest im Bereich geringer Öffnungsgrade des Durchflußeinstellorgans (2) und damit geringer Strahldimension direkt auf die Flügel (9) des Flügelrades (1) trifft, und daß die Volumenmeßeinrichtung ein steuerbares elektronisches Untersetzungsgetriebe aufweist, wobei der Untersetzungsfaktor in Abhängigkeit vom Öffnungsgrad des Durchflußeinstellorgans (2) eingestellt ist.

2. Volumenmesser nach Anspruch 1, gekennzeichnet durch wenigstens eine Einrichtung zur Bestimmung des Öffnungsgrades des Durchflußeinstellorgans (2).

3. Volumenmesser nach einem der Ansprüche 1 oder 2, dadurch gekennzeichnet, daß die Einrichtung elektronische Wegaufnehmer, Drucksensoren und elektronische Regler zur Vorgabe des Soll-Öffnungsgrades umfaßt.

4. Volumenmesser nach einem der Ansprüche 1 bis 3, dadurch gekennzeichnet, daß er Teil eines Wärmemengenzählers ist.

5. Volumenmesser nach einem der Ansprüche 1 bis 4, dadurch gekennzeichnet, daß das Durchflußeinstellorgan ein durch die Raumtemperatur gesteuertes Bauteil ist.

6. Volumenmesser nach einem der Ansprüche 1 bis 5, dadurch gekennzeichnet, daß der Untersetzungsfaktor in Abhängigkeit der als Maß für den Öffnungsgrad dienenden Raumtemperatur eingestellt ist.

7. Volumenmesser nach einem der vorangehenden Ansprüche, dadurch gekennzeichnet, daß das thermostatisch arbeitende Durchflußeinstellorgan (2) auf der Basis eines Bimetallreglers, eines elektromechanischen oder eines piezoelektrischen Reglers arbeitende Thermostatventile umfaßt.

## Claims

1. Flow meter, having a flow measuring device measuring the volume of a fluid flowing through, comprising a fluid-flow-operated impeller (1), a through-flow setting element (2) controlling the fluid flow, and an electronic control and evaluation device, wherein the through-flow setting element (2), which is variable between a closed position, in which it interrupts the fluid flow to the impeller, and an open position with maximum fluid flow, is so disposed relative to the impeller (1), that the fluid jet (8) generated by the through-flow setting element (2), at least in the region of a slight degree of aperture of the through-flow setting element (2) and therefore slight jet dimension, hits direct the wings (9) of the impeller (1), and in that the flow measuring device has a controllable electronic reducing gear, wherein the reducing factor is set as a function of the degree of aperture of the through-flow setting element (2).

2. Flow meter according to claim 1, characterised by at least one device for determining the degree of aperture of the through-flow setting element (2).

3. Flow meter according to one of claims 1 or 2, characterised in that the device comprises electronic displacement transducers, pressure sensors, and electronic regulators for specifying the reference degree of aperture.

4. Flow meter according to one of claims 1 to 3, characterised in that it is part of a heat counter.

5. Flow meter according to one of claims 1 to 4, characterised in that the through-flow setting element is a component controlled by the ambient temperature.

6. Flow meter according to one of claims 1 to 5, characterised in that the reducing factor is set as a function of the ambient temperature acting as a measure for the degree of aperture.

7. Flow meter according to one of the preceding claims, characterised in that the thermostatically operating through-flow setting element (2) comprises thermostatic valves operating on the basis of a bimetal regulator, an electromechanical or a piezoelectric regulator.

## Revendications

1. Compteur volumétrique comportant un dispositif de mesure volumétrique, qui mesure le volume d'un fluide en écoulement, comprenant une roue à ailettes (1) entraînée par un écoulement de fluide, un organe (2) de réglage de débit, qui règle le débit du fluide, et un système électronique de commande et d'exploitation, l'organe (2) de réglage du débit, qui peut être commuté entre une position fermée, dans laquelle il interrompt l'écoulement du fluide en direction de la roue à ailettes, et une position ouverte correspondant à l'écoulement maximum du fluide, étant disposé par rapport à la roue à ailettes (1) de telle sorte que le jet de fluide (8) produit par l'organe (2) de réglage du débit rencontre directement les ailettes (9) de la roue à ailettes (1) au moins dans la gamme de faibles degrés d'ouverture de l'organe (2) de réglage du débit et par conséquent d'une faible dimension du jet, et que le dispositif de mesure de volume possède un mécanisme de démultiplication électronique commandable, le facteur de démultiplication étant réglé en fonction du degré d'ouverture de l'organe (2) de réglage du débit.

2. Compteur volumétrique selon la revendication 1, caractérisé par au moins un dispositif pour déterminer le degré d'ouverture de l'organe (2) de réglage du débit.

3. Compteur volumétrique selon l'une des revendications 1 ou 2, caractérisé en ce que le dispositif comprend des capteurs électroniques de distance, des capteurs électroniques de pression et des régulateurs électroniques pour prédéterminer le degré d'ouverture de consigne.

4. Compteur volumétrique selon l'une des revendications 1 à 3, caractérisé en ce qu'il fait partie d'un calorimètre.

5. Compteur volumétrique selon l'une des revendications 1 à 4, caractérisé en ce que l'organe de réglage de débit est un composant commandé par la température ambiante.

6. Compteur volumétrique selon l'une des revendications 1 à 5, caractérisé en ce que le facteur de démultiplication est réglé en fonction de la température ambiante utilisée en tant que mesure du degré d'ouverture.

7. Compteur volumétrique selon l'une des revendications précédentes, caractérisé en ce que l'organe (2) de réglage du débit, qui travaille d'une manière thermostatique, comporte des soupapes thermostatiques travaillant sur la base d'un régulateur bimétallique, d'un régulateur électromécanique ou d'un régulateur piézoélectrique.
